# EUROPEAN PATENT SPECIFICATION

(11) **EP 2 775 758 B1**
(45) Date of publication and mention of the grant of the patent: **31.01.2018**
(21) Application number: 12846529.1
(22) Date of filing: 21.02.2012
(51) Int. Cl.: H04L 5/00, H04W 28/16

(54) **CARRIER AGGREGATION METHOD AND DEVICE IN LTE-A SYSTEM**
TRÄGERAGGREGATIONSVERFAHREN UND -VORRICHTUNG IN EINEM LTE-SYSTEM
PROCÉDÉ ET DISPOSITIF D'AGRÉGATION DE PORTEUSES DANS UN SYSTÈME LTE-A

(30) Priority: 01.11.2011 CN 201110340074
(43) Date of publication of application: 10.09.2014
(73) Proprietor: ZTE Corporation, Shenzhen, Guangdong 518057 (CN)
(72) Inventor: CHEN, Jixun, Shenzhen Guangdong 518057 (CN); YAN, Pengzhou, Shenzhen Guangdong 518057 (CN); YI, Hongfeng, Shenzhen Guangdong 518057 (CN); SHI, Kui, Shenzhen Guangdong 518057 (CN)
(74) Representative: Portch, Daniel
(86) International application number: PCT/CN2012/071387
(87) International publication number: WO 2013/063885

(56) References cited:
- WO-A2-2011/121578
- CN-A- 102 083 154
- US-A1- 2011 103 332
- MIKIO IWAMURA ET AL: "Carrier aggregation framework in 3GPP LTE-advanced [WiMAX/LTE Update]", IEEE COMMUNICATIONS MAGAZINE, IEEE SERVICE CENTER, PISCATAWAY, US, vol. 48, no. 8, 1 August 2010 (2010-08-01) , pages 60-67, XP011315996, ISSN: 0163-6804
- NOKIA CORPORATION ET AL: "Comparison of CC Management Strategies", 3GPP DRAFT; R2-103513 COMPARISON OF CC MANAGEMENT POLICIES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Stockholm, Sweden; 20100628 - 20100702, 22 June 2010 (2010-06-22), XP050605215, [retrieved on 2010-06-22]
- MEDIATEK INC: "s-Measure Handling for Mobility and CC Management", 3GPP DRAFT; R2-103632_S-MEASURE_HANDLING_IN_CA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Stockholm, Sweden; 20100628, 22 June 2010 (2010-06-22), XP050451159, [retrieved on 2010-06-22]
- 3GPP: "3rd Generation Partnership Project; Technical Specification Group Radio Access Network; Evolved Universal Terrestrial Radio Access (E-UTRA); Radio Resource Control (RRC); Protocol specification (Release 10)", 3GPP DRAFT; 36331-A30, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, 1 October 2011 (2011-10-01), XP050539396, [retrieved on 2011-10-01]
- NOKIA CORPORATION ET AL: "Configuration of SCell based measurement events", 3GPP DRAFT; R2-103506 CONFIGURATION OF SCELL BASED MEASUREMENT EVENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Stockholm, Sweden; 20100628, 22 June 2010 (2010-06-22), XP050451094, [retrieved on 2010-06-22]

## Description

### Technical Field

The present document relates to the field of wireless communications, and in particular, to a method and apparatus for achieving carrier aggregation in a Long Term Evolution Advanced (LTE-A) system.

### Background of the Related Art

The LTE-A is technology evolution made by the 3rd Generation Partnership Project (3GPP) on a basis of the LTE for the purpose of satisfying the International Mobile Telecommunications Advanced (IMT-Advanced). In order to satisfy the requirements of the IMT-A and future communications on a higher peak rate, the LTE-A supports a maximum bandwidth of 100MHz. However, in the existing available spectrum resources, it is difficult to find such a large bandwidth, and a large bandwidth brings a great difficulty to the design of the hardware of the base station and the terminal. In addition, for spectrum resources dispersed over multiple frequency bands, a technology is desired to make full use of these spectrum resources.

Document "Carrier aggregation framework in 3GPP LTE-advanced [WiMAX/LTE Update]" (MIKIO IWAMURA ET AL; XP011315996) discloses that the UE can be configured with additional serving cells, and to activate/deactivate serving cells depending on such elements as the buffered data amount, required QoS, and carrier loading.

### Summary of the Invention

The technical problem to be solved by the present document is to provide a method and apparatus as defined in the present independent claims for achieving carrier aggregation in a LTE-A system, to provide spectrum resources of a large bandwidth. The invention is defined and limited by the scope of appended claims 1-5. In the following description, any embodiment(s) referred to and not falling within the scope of the appended claims, is (are) merely example(s) useful to the understanding of the invention. With the method according to the embodiments of the present document, carrier aggregation can be reasonably selected and used in the LTE-A system, the system can obtain a larger bandwidth, and the throughput of the system is improved significantly.

### Brief Description of Drawings

The accompanying drawings described herein are used to provide a better understanding of the present document and constitute a part of this application, and the schematic embodiments of the present document and the descriptions thereof are used to explain the present document and do not constitute an improper definition of the present document. In the accompanying drawings:
Fig. 1 is a diagram of intra-band contiguous carrier aggregation;
Fig. 2 is a diagram of intra-band non-contiguous carrier aggregation;
Fig. 3 is a diagram of inter-band non-contiguous carrier aggregation;
Fig. 4 is an overview flowchart of a method according to an embodiment of the present document;
Fig. 5 is a flowchart of embodiment one of the present document;
Fig. 6 is a flowchart of embodiment two of the present document;
Fig. 7 is a flowchart of embodiment three of the present document;
Fig. 8 is a flowchart of embodiment four of the present document;
Fig. 9 is a flowchart of embodiment five of the present document; and
Fig. 10 is a structural diagram of an apparatus according to embodiment six of the present document.

### Preferred Embodiments of the Invention

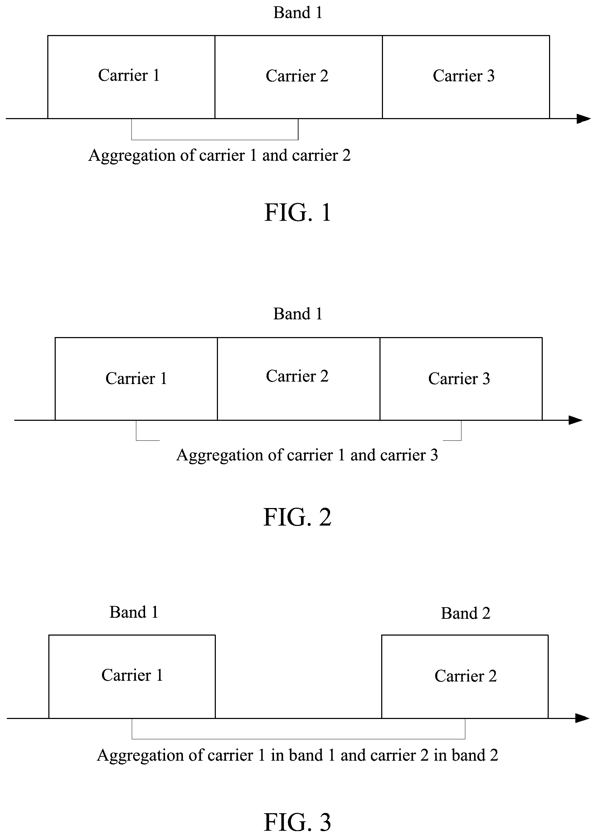

The Carrier Aggregation (CA) technology satisfies the requirements of the system on a large bandwidth by extending in the frequency domain. The CA refers to aggregating multiple Composition Carriers (CCs) together to serve the UE, wherein, there are at most 5 aggregated CCs, each CC is at most of 20MHz, and these CCs may be contiguous or dispersed in frequency. Scenarios of carrier aggregation may be divided into three types, i.e., intra-band contiguous carrier aggregation (as shown in Fig, 1), intra-band non-contiguous carrier aggregation (as shown in Fig, 2), and out-of-band non-contiguous carrier aggregation, which is also referred to as inter-band non-contiguous carrier aggregation (as shown in Fig. 3). A carrier which maintains an RRC connection with the UE is referred to as a Primary Composition Carrier (PPC), which is a primary carrier for short, or a Primary serving cell (PCell), and a carrier except the primary carrier is referred to as a Secondary Composition Carrier (SCC), which is a secondary carrier for short, or is a Secondary serving cell (SCell). The PPC is always activated, and the SCC may be activated through a PCC or an activated SCC. The SCC may be deactivated (release; including itself) through a PCC or an activated SCC, and the SCC may also be deactivated through discontinuous reception (DRXD) or a deactivation timer.

In a condition that an operator has multiple available spectrum resources, the CA technology may be applied, to more effectively utilize the spectrum resources which may be acquired by the operator. It should be illustrated that since the carrier aggregation can only occur in an area which can be covered by multiple bands, the present document is primarily used for a scenario that an operator has multiple available spectrum resources.

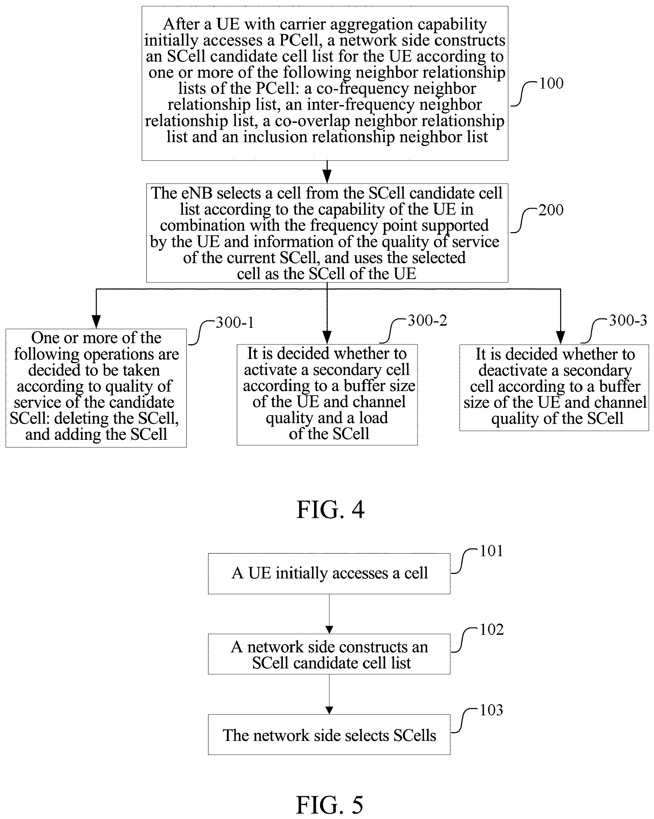

The method provided by the present document will be described below, as shown in Fig. 4, which comprises the following steps.

In step 100, after a UE with carrier aggregation capability initially accesses a cell (PCell), a network side (such as an eNB) constructs an SCell candidate cell list for the UE according to one or more of the following neighbor relationship lists of the PCell (i.e., a cell which the UE accesses):
a co-frequency neighbor relationship list, an inter-frequency neighbor relationship list, a co- coverage neighbor relationship list and an inclusion- coverage relationship neighbor list;
wherein, a union of several neighbor relationship lists above may be used as an SCell candidate cell list of the UE.

In step 200, the eNB selects a cell from the SCell candidate cell list according to the capability of the UE in combination with the frequency point supported by the UE and the quality of service of the candidate cell, and uses the selected cell as the SCell of the UE;
how to select a cell according to the capability of the UE, the frequency point supported by the UE and information of the quality of service of the candidate cell specifically can be implemented using the existing technology, and the details thereof will be omitted herein.

In step 300-1, one or more of the following operations will be decided to be taken according to quality of service of the candidate SCell:
deleting the SCell, and adding the SCell.

In step 300-2, it is decided whether to activate a secondary cell according to a buffer size of the UE and channel quality and a load of the SCell.

In step 300-3, it is decided whether to deactivate a secondary cell according to a buffer size of the UE and channel quality of the SCell.

The above steps 300-1, 300-2 and 300-3 may be performed in the same embodiment, or may also be performed in three embodiments respectively, i.e., any embodiment may include steps 100, 200 and 300-1, or include steps 100, 200 and 300-2, or include steps 100, 200 and 300-3. In addition, in some embodiments, in addition to including the above steps 100 and 200, any combination of steps 300-1, 300-2 and 300-3 may also be included, for example, including steps 300-1 and 300-2, or including steps 300-1 and 300-3, or including steps 300-2 and 300-3.

Wherein,
when the quality of service of a current certain SCell of the UE becomes worse, i.e., being below a preset threshold of the quality of service (for example, due to mobility of the UE), the network side may delete the SCell;
when the quality of service of a certain SCell candidate cell is good, i.e., exceeding a preset threshold of the quality of service (QS_{scell}) and the number of the current SCells of the UE does not reach an upper limit (MAX_{scell}), the network side adds the SCell candidate cell as the SCell of the UE;
when a BSR of the UE reaches a preset first threshold of the BSR (BSR_{HI_th}), a CQI on the SCell is higher than a preset first threshold of the CQI (CQI_{HI_th}) and a load of the SCell to be activated is less than a preset threshold of the load (LOADₜₕ), the SCell is activated (or enabled);
after the SCell is activated, when the BSR of the UE is lower than a preset second threshold of the BSR (BSR_{LO_th}) and a CQI on the SCell is lower than a preset second threshold of the CQI (CQI_{LO_th}), the SCell is explicitly deactivated.

Wherein, the first threshold of the BSR is larger than the second threshold of the BSR; and the first threshold of the CQI is larger than the second threshold of the CQI.

The number of the SCells to be activated or deactivated is determined according to the following table, wherein, the BSR is a buffer state report of the current UE, and N₁, N₂ are the number of corresponding SCells needed to be activated and the number of corresponding SCells needed to be deactivated respectively.

**Table 1**

| Range of buffer state report | Number of SCells needed to be activated or deactivated |
|---|---|
| BSR>N₁ * BSR_{HI_ th} | N₁ SCells to be activated |
| BSR<N2 * BSR_{LO_ th} | N₂ SCells to be deactivated |

In order to make the purpose, technical schemes and advantages of the present document more clear and apparent, the embodiments of the present document will be illustrated in detail hereinafter in conjunction with accompanying drawings. It should be illustrated that, in the case of no conflict, the embodiments of this application and the features in the embodiments could be combined randomly with each other. All these combinations fall into the protection scope of the present document.

### Embodiment one

The present embodiment introduces how to select an Scell for the UE, as shown in Fig. 5, which comprises the following steps.

In step 101, the UE initially accesses a cell (PCell);
in step 102, a network side (such as an eNB) constructs an SCell candidate cell list of the UE according to one or more of the following neighbor relationship list of the PCell (i.e., a cell which the UE accesses):
a co-frequency neighbor relationship list, an inter-frequency neighbor relationship list, a co-coverage neighbor relationship list and an inclusion-coverage relationship neighbor list;
wherein, if there is only one neighbor relationship list, the neighbor relationship list is used as an SCell candidate cell list; and if there are multiple neighbor relationship lists, a union of the multiple neighbor relationship lists is used as the SCell candidate cell list.

In step 103, the eNB selects a cell from the SCell candidate cell list according to the capability of the UE in combination with a frequency point supported by the UE and information of the quality of service of the current SCell, and uses the selected cell as the SCell of the UE.

### Embodiment two

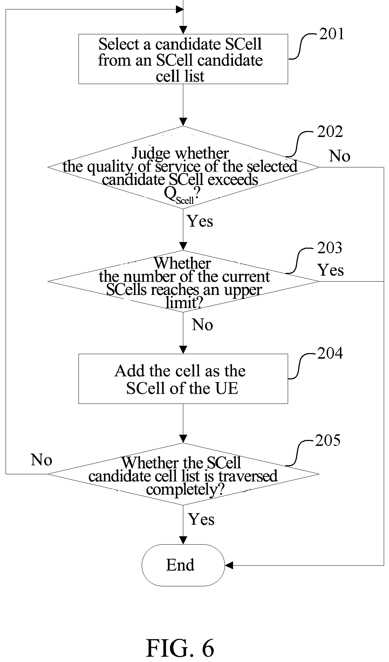

The above embodiment introduces how to construct an SCell candidate cell list and how to select an SCell from the candidate cell list during an initial access, and the present embodiment describes how to add an SCell after the initial access. The present procedure may be performed periodically, as shown in Fig. 6, which comprises the following steps.

In step 201, a candidate SCell is selected from the SCell candidate cell list; preferably, the SCell may be selected in accordance with a certain order, for example, a priority order.

In step 202, it is judged whether the quality of service of the candidate SCell exceeds a set threshold of the quality of service (QS_{scell}), and if so, step 203 is performed; otherwise, the process ends;
in step 203, it is judged whether the number of current SCells of the UE exceeds an upper limit value (MAX_{scell}), and if it does not reach the upper limit value MAX_{scell}, step 204 is performed; and if it reaches the upper limit value MAX_{scell}, the process ends;
in step 204, after the cell is added as the SCell of the UE, step 205 is performed; and
in step 205, it is judged whether all SCell candidate cells are traversed completely, and if so, the process ends; and if not, the process returns to step 201, and a candidate SCell is reselected to perform the above procedure.

### Embodiment three

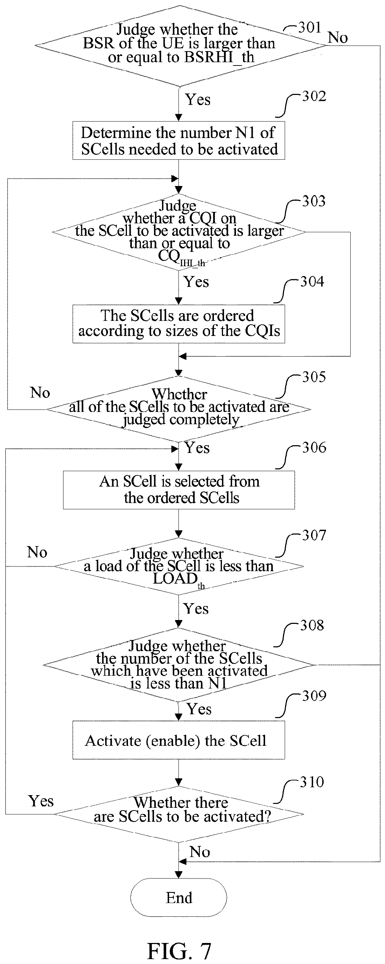

After the SCells in the candidate SCells are added as SCells, these SCells can only be used after they are activated, these cells added as SCells may be referred to as SCells to be activated when they are not activated. The present embodiment introduces how to activate the SCells, as shown in Fig. 7, which comprises the following steps.

In step 301, it is judged whether the current BSR of the UE reaches a preset first threshold of the BSR (BSR_{HI_th}), and if so, step 302 is performed; otherwise, the process ends;
as the BSR of the UE represents a buffer size of the UE, if the buffer is large enough, it represents that it needs to enable a secondary carrier to transmit data and the SCells are activated.

In step 302, the number N₁ of SCells needed to be activated is determined according to table 1;
in step 303, it is judged whether the CQI on the SCell to be activated reaches a preset first threshold of the CQI (CQI_{HI_th}), and if so, step 304 is performed; otherwise, step 305 is performed;
in step 304, the SCells are ordered according to sizes of the CQIs of the SCells to be activated (for example, from large to small);
in step 305, it is judged whether all SCells to be activated are judged completely, and if so, step 306 is performed; otherwise, a next SCell is selected and the process returns to step 303;
in step 306, the SCells are selected orderly from the SCells which are ordered through the CQI;
in step 307, it is judged whether the load of the selected SCell is less than a threshold of the load (LOADₜₕ), and if so, step 308 is performed; otherwise, the process returns to step 306;
in step 308, it is judged whether the number of SCells which have been activated reaches *N*₁, and if it does not reach *N*₁, step 309 is performed; and if it reaches *N*₁, the process ends;
in step 309, the SCells are activated (enabled); and
in step 310, it is judged whether there are further SCells to be activated, and if so, the process returns to step 306; otherwise, the process ends.

### Embodiment four

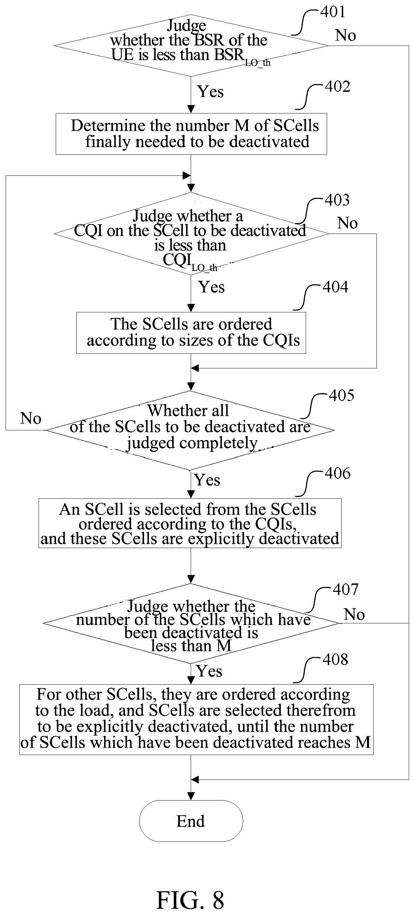

The embodiment introduces how to deactivate the SCell, as shown in Fig. 8, which comprises the following steps.

In step 401, it is judged whether the current BSR is lower than a preset second threshold of the BSR (BSR_{LO_th}), and if so, step 402 is performed; otherwise, the process ends;
in step 402, the total number N₂ of SCells needed to be deactivated is determined according to table 1, and then the number M of SCells needed to be deactivated is finally determined according to the number K of SCells which have been activated currently by the UE;
Specifically, M=min(N₂, K).
in step 403, it is judged whether a CQI on the SCell to be deactivated is lower than a preset second threshold of the CQI (CQI_{LO_th}), and if so, step 404 is performed; otherwise, step 405 is performed;
in step 404, the SCells are ordered according to sizes of the CQIs of the SCells to be deactivated (for example, from small to large);
in step 405, it is judged whether all SCells to be deactivated have been judged completely, and if so, step 406 is performed; otherwise, a next SCell is selected and the process returns to step 403;
in step 406, the SCells are selected orderly from the SCells which are ordered through the CQIs, to explicitly deactivate these SCells;
If the number of the SCells which are ordered through the CQIs is larger than M, first M SCells are selected therefrom to be explicitly deactivated, and if the number is less than M, all of these SCells are explicitly deactivated.

In step 407, it is judged whether the number of the SCells which have been deactivated does not reach M, and if so, step 408 is performed; otherwise, the process ends;
in step 408, for other SCells (i.e., SCells which do not satisfy the condition in step 403), they are ordered according to the load (for example, for large to small), and the SCells are selected therefrom to be explicitly deactivated, until the number of SCells which have been deactivated reaches M, and the process ends.

### Embodiment five

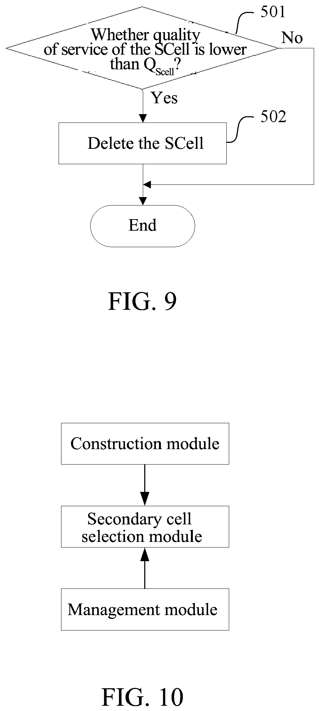

The present embodiment introduces how to delete the Scell, as shown in Fig. 9, which comprises the following steps.

In step 501, it is judged whether quality of service of the SCell of the UE is lower than a set threshold of the quality of service (QS_{scell}), and if so, step 502 is performed; otherwise, the process ends; and
in step 502, the network side (such as an eNB) deletes the SCell.

### Embodiment six

The present embodiment describes an apparatus for achieving carrier aggregation, as shown in Fig. 10, which comprises a construction module, a secondary cell selection module and a management module, wherein,
the construction module is configured to construct a secondary cell candidate cell list for a UE after the UE with carrier aggregation capability initially accesses a primary cell;
the secondary cell selection module is configured to select a secondary cell for the UE from the secondary cell candidate cell list constructed for the UE by the construction module;
the management module is configured to perform one or more of the following operations: deciding to delete a secondary cell according to quality of service of the secondary cell; deciding to add a secondary cell according to quality of service of the secondary cell; deciding whether to activate a secondary cell according to a buffer size of the UE and channel quality and a load of the secondary cell; and deciding whether to deactivate a secondary cell according to a buffer size of the UE and channel quality of the secondary cell.
wherein,
the management module is configured to decide to delete a secondary cell according quality of service of the secondary cell by means of: when quality of service of a current certain secondary cell of the UE is lower than a threshold of the quality of service, the network side deleting the secondary cell;
the management module is configured to decide to add a secondary cell according to quality of service of the UE by means of: when quality of service of a cell in candidate cells of a certain secondary cell is higher than a threshold of the quality of service and the number of the current secondary cells of the UE does not reach an upper limit value, the network side adding the cell as the secondary cell of the UE;
the management module is configured to decide to activate a secondary cell according to a buffer size of the UE and channel quality and a load of the secondary cell by means of: when a BSR of the UE reaches a first threshold of the BSR, a CQI of a current secondary cell reaches a first threshold of the CQI and a load of the secondary cell to be activated is less than a threshold of the load, the network side activating the secondary cell;
the management module is configured to decide to deactivate a secondary cell according to a buffer size of the UE and channel quality of the secondary cell by means of: when the BSR of the UE is lower than a second threshold of the BSR and the CQI of a certain secondary cell is lower than a second threshold of the CQI, the network side explicitly deactivating the secondary cell.

The embodiments of the present document provide a method for achieving carrier aggregation in a LTE-A system, comprising:
after a UE with carrier aggregation capability initially accesses a primary cell, a network side constructing a secondary cell candidate cell list for the UE and selecting a secondary cell for the UE from the secondary cell candidate cell list;
one or more of the following operations is decided to be taken by the network side according to quality of service of the secondary cell: deleting the secondary cell, and adding the secondary cell.

Wherein, the network side constructing a secondary cell candidate cell list for the UE comprises:
the network side constructing the secondary cell candidate cell list for the UE according to one or more of the following neighbor lists of the primary cell: a co-frequency neighbor relationship list, an inter-frequency neighbor relationship list, a co- coverage neighbor relationship list and an inclusion-coverage relationship neighbor list.

Wherein, the network side deciding to delete a secondary cell according to quality of service of the secondary cell comprises: when quality of service of a current certain secondary cell of the UE is lower than a threshold of the quality of service, the network side deleting the secondary cell.

Wherein, the network side deciding to add a secondary cell according to quality of service of the UE comprises: when quality of service of a cell in candidate cells of a certain secondary cell is higher than a threshold of the quality of service and the number of the current secondary cells of the UE does not reach an upper limit value, the network side adding the cell as the secondary cell of the UE.

The embodiments of the present document further provide a method for achieving carrier aggregation in a LTE-A system, comprising:
after a UE with carrier aggregation capability initially accesses a primary cell, a network side constructing a secondary cell candidate cell list for the UE and selecting a secondary cell for the UE from the secondary cell candidate cell list;
deciding whether to activate a secondary cell according to a buffer size of the UE and channel quality and a load of the secondary cell; and/or deciding whether to deactivate a secondary cell according to a buffer size of the UE and channel quality of the secondary cell.

Wherein, the network side constructing a secondary cell candidate cell list for the UE comprises:
the network side constructing the secondary cell candidate cell list for the UE according to one or more of the following neighbor lists of the primary cell: a co-frequency neighbor relationship list, an inter-frequency neighbor relationship list, a co- coverage neighbor relationship list and an inclusion-coverage relationship neighbor list.

Wherein, the network side deciding to activate a secondary cell according to quality of service of the UE comprises: when a BSR of the UE reaches a first threshold of the BSR and a CQI on the current secondary cell reaches a first threshold of the CQI and a load of the secondary cell to be activated is less than a threshold of the load, the network side activating the secondary cell.

Wherein, the network side deciding to deactivate a secondary cell according to quality of service of the UE comprises: when the BSR of the UE is lower than a second threshold of the BSR and the CQI on a certain secondary cell is lower than a second threshold of the CQI, the network side explicitly deactivating the secondary cell.

The embodiments of the present document further provide an apparatus for achieving carrier aggregation in a LTE-A system, comprising a construction module, a secondary cell selection module and a management module, wherein,
the construction module is configured to construct a secondary cell candidate cell list for a UE after the UE with carrier aggregation capability initially accesses a primary cell;
the secondary cell selection module is configured to select a secondary cell for the UE from the secondary cell candidate cell list constructed for the UE by the construction module;
the management module is configured to perform one or more of the following operations: deciding to delete a secondary cell according to quality of service of the secondary cell; deciding to add a secondary cell according to quality of service of the secondary cell; deciding whether to activate a secondary cell according to a buffer size of the UE and channel quality and a load of the secondary cell; and deciding whether to deactivate a secondary cell according to a buffer size of the UE and channel quality of the secondary cell.

Wherein, the management module is configured to decide to delete a secondary cell according quality of service of the secondary cell by means of: when quality of service of a current certain secondary cell of the UE is lower than a threshold of the quality of service, the network side deleting the secondary cell; or
the management module is configured to decide to add a secondary cell according to quality of service of the UE by means of: when quality of service of a cell in candidate cells of a certain secondary cell is higher than a threshold of the quality of service and the number of the current secondary cells of the UE does not reach an upper limit value, the network side adding the cell as the secondary cell of the UE; or
the management module is configured to decide to activate a secondary cell according to quality of service of the UE by means of: when a BSR of the UE reaches a first threshold of the BSR, a CQI on a current secondary cell reaches a first threshold of the CQI and a load of the secondary cell to be activated is less than a threshold of the load, the network side activating the secondary cell; or
the management module is configured to decide to deactivate a secondary cell according to quality of service of the UE by means of: when the BSR of the UE is lower than a second threshold of the BSR and the CQI on a certain secondary cell is lower than a second threshold of the CQI, the network side explicitly deactivating the secondary cell.

A person having ordinary skill in the art can understand that all or part of steps in the above method can be implemented by programs instructing related hardware, and the programs can be stored in a computer readable storage medium, such as a read-only memory, disk or disc etc. Alternatively, all or part of steps in the above embodiments can also be implemented by one or more integrated circuits. Accordingly, each module/unit in the above embodiments can be implemented in a form of hardware, or can also be implemented in a form of software functional module. The present document is not limited to any particular form of a combination of hardware and software.

### Industrial Applicability

With the above solution, carrier aggregation can be reasonably selected and used in the LTE-A system, the system can obtain a larger bandwidth, and the throughput of the system is improved significantly. Therefore, the present document has powerful industrial applicability.

## Claims

1. A method for achieving carrier aggregation in a Long Term Evolution Advanced, LTE-A, system, comprising:
(100) a network side, after a User Equipment, UE, with carrier aggregation capability initially accesses a primary cell, constructing a secondary cell candidate cell list for the UE, selecting a candidate secondary cell for the UE from the secondary cell candidate cell list;
wherein the network side constructs the secondary cell candidate cell list for the UE according to one or more of the following neighbor lists of the primary cell: a co-frequency neighbor relationship list, an inter-frequency neighbor relationship list;
the network side deciding to perform the following operations on current secondary cells of the UE according to quality of service of the selected candidate secondary cell:
(300-1) deleting the selected candidate secondary cell from the current secondary cells of the UE; or
adding the selected candidate secondary cell into the current secondary cells of the UE; and
the method further comprising: (300-2) the network side deciding whether to activate a certain secondary cell in the current secondary cells of the UE according to a buffer size of the UE and channel quality and a load of the certain secondary cell; and
(300-3) the network side deciding whether to deactivate a certain secondary cell in the current secondary cells of the UE according to a buffer size of the UE, channel quality and a load of the certain secondary cell,
wherein, the step of the network side deciding to activate a certain secondary cell in the current secondary cells of the UE according to a buffer size of the UE, channel quality and a load of the certain secondary cell comprises:
when a Buffer Status Report, BSR, of the UE reaches a first threshold of the BSR and a Channel Quality Indicator, CQI, of the secondary cell reaches a first threshold of the CQI and a load of the secondary cell to be activated is less than a threshold of the load, the network side activating the secondary cell; and
wherein, the step of the network side deciding to deactivate a certain secondary cell in the current secondary cells of the UE according to a buffer size of the UE and channel quality and a load of the certain secondary cell comprises:
when the BSR of the UE is lower than a second threshold of the BSR and the CQI of the secondary cell to be deactivated is lower than a second threshold of the CQI, the network side explicitly deactivating the secondary cell.

2. The method according to claim 1, wherein, a step of the network side deciding to delete a corresponding secondary cell from the current secondary cells of the UE according to quality of service of the secondary cell comprises:
when quality of service of a certain secondary cell in the current secondary cells of the UE is lower than a threshold of the quality of service, the network side deleting the secondary cell from the current secondary cells of the UE.

3. The method according to claim 1 or 2, wherein, a step of the network side deciding to add a corresponding secondary cell into the current secondary cells of the UE according to quality of service of the UE comprises:
when quality of service of a secondary cell in candidate cells of a certain secondary cell is higher than a threshold of the quality of service and a number of the current secondary cells of the UE does not reach an upper limit value, the network side adding the corresponding secondary cell into the current secondary cells of the UE.

4. An apparatus for achieving carrier aggregation in a Long Term Evolution Advanced, LTE-A, system, located at a network side, comprising a construction module, a secondary cell selection module and a management module, wherein,
the construction module is configured to construct a secondary cell candidate cell list for a User Equipment, UE, after the UE with carrier aggregation capability initially accesses a primary cell, wherein the construction module is adapted to construct the secondary cell candidate cell list for the UE according to one or more of the following neighbor lists of the primary cell: a co-frequency neighbor relationship list, an inter-frequency neighbor relationship list;
the secondary cell selection module is configured to select a candidate secondary cell for the UE from the secondary cell candidate cell list constructed for the UE by the construction module;
the management module is configured to perform one or more of the following operations on current secondary cells of the UE according to quality of service of the selected candidate secondary cell:
deleting the selected secondary cell from the current secondary cells of the UE; and
adding the selected candidate secondary cell into the current secondary cells of the UE;
the management module is configured to decide to deactivate a certain secondary cell in the current secondary cells of the UE according to a buffer size of the UE and channel quality and a load of the certain secondary cell, the management module being adapted to, when the BSR of the UE is lower than a second threshold of the BSR and the CQI of the secondary cell to be deactivated is lower than a second threshold of the CQI, explicitly deactivate the secondary cell;
the management module is configured to decide to activate a certain secondary cell in the current secondary cells of the UE according to a buffer size of the UE, channel quality and a load of the certain secondary cell, the management module being adapted to, when a Buffer Status Report, BSR, of the UE reaches a first threshold of the BSR and a Channel Quality Indicator, CQI, of the secondary cell reaches a first threshold of the CQI and a load of the secondary cell to be activated is less than a threshold of the load, activate the secondary cell.

5. The apparatus according to claim 4, wherein,
the management module is configured to decide to delete a certain secondary cell by means of: when quality of service of a certain secondary cell in the current secondary cells of the UE is lower than a threshold of the quality of service, deleting the secondary cell from the current secondary cells of the UE;
the management module is configured to decide to add a certain secondary cell by means of: when quality of service of a certain secondary cell in candidate cells of the certain secondary cell is higher than a threshold of the quality of service and a number of the current secondary cells of the UE does not reach an upper limit value, adding the secondary cell in the current secondary cells of the UE.

## Patentansprüche

1. Verfahren zum Erreichen von Trägeraggregation in einem Long Term Evolution Advanced-, LTE-A, System, aufweisend:
(100) eine Netzwerkseite, die, nachdem ein Benutzergerät UE mit Trägeraggregationsfähigkeit zunächst auf eine primäre Zelle zugreift, eine sekundäre Zellenkandidaten-Zellenliste für das UE aufbaut, wobei eine sekundäre Kandidatenzelle für das UE aus der sekundären Zellenkandidaten-Zellenliste ausgewählt wird;
wobei die Netzwerkseite die sekundäre Zellenkandidaten-Zellenliste für das UE gemäß einer oder mehreren der folgenden Nachbarlisten der primären Zelle aufbaut:
eine Gleichkanal-Nachbarbeziehungsliste, eine Zwischenfrequenz-Nachbarbeziehungsliste;
wobei die Netzwerkseite entscheidet, die folgenden Operationen an aktuellen sekundären Zellen des UE gemäß Dienstgüte der ausgewählten sekundären Kandidatenzelle auszuführen:
(300-1) Löschen der ausgewählten sekundären Kandidatenzelle aus den aktuellen sekundären Zellen des UE; oder
Hinzufügen der ausgewählten sekundären Kandidatenzelle zu den aktuellen sekundären Zellen des UE; und
wobei das Verfahren ferner aufweist: (300-2) Entscheiden der Netzwerkseite, ob eine bestimmte sekundäre Zelle in den aktuellen sekundären Zellen des UE gemäß einer Puffergröße des UE und Kanalqualität und einer Last der bestimmten sekundären Zelle aktiviert werden soll; und
(300-3) Entscheiden der Netzwerkseite, ob eine bestimmte sekundäre Zelle in den aktuellen sekundären Zellen des UE gemäß einer Puffergröße des UE, der Kanalqualität und einer Last der bestimmten sekundären Zelle deaktiviert werden soll,
wobei der Schritt des Entscheidens der Netzwerkseite, eine bestimmte sekundäre Zelle in den aktuellen sekundären Zellen des UE gemäß einer Puffergröße des UE, der Kanalqualität und einer Last der bestimmten sekundären Zelle zu aktivieren, aufweist:
dass die Netzwerkseite die sekundäre Zelle aktiviert, wenn ein Pufferstatusbericht BSR des UE einen ersten Schwellenwert des BSR erreicht, und ein Kanalqualitätsindikator CQI der sekundären Zelle einen ersten Schwellenwert des CQI erreicht, und eine Last der zu aktivierenden sekundären Zelle niedriger als ein Schwellenwert der Last ist; und
wobei der Schritt des Entscheidens der Netzwerkseite, eine bestimmte sekundäre Zelle in den aktuellen sekundären Zellen des UE gemäß einer Puffergröße des UE und der Kanalqualität und einer Last der bestimmten sekundären Zelle zu deaktivieren, aufweist:
dass die Netzwerkseite die sekundäre Zelle explizit deaktiviert, wenn der BSR des UE niedriger als ein zweiter Schwellenwert des BSR ist, und der CQI der zu deaktivierenden sekundären Zelle niedriger als ein zweiter Schwellenwert des CQI ist.

2. Verfahren nach Anspruch 1, wobei ein Schritt des Entscheidens der Netzwerkseite, eine entsprechende sekundäre Zelle aus den aktuellen sekundären Zellen des UE gemäß der Dienstgüte der sekundären Zelle zu löschen, aufweist:
dass die Netzwerkseite die sekundäre Zelle aus den aktuellen sekundären Zellen des UE löscht, wenn die Dienstgüte einer bestimmten sekundären Zelle in den aktuellen sekundären Zellen des UE niedriger als ein Schwellenwert der Dienstgüte ist.

3. Verfahren nach Anspruch 1 oder 2, wobei ein Schritt des Entscheidens der Netzwerkseite, eine entsprechende sekundäre Zelle zu den aktuellen sekundären Zellen des UE gemäß der Dienstgüte des UE hinzuzufügen, aufweist:
dass die Netzwerkseite die entsprechende sekundäre Zelle zu den aktuellen sekundären Zellen des UE hinzufügt, wenn die Dienstgüte einer sekundären Zelle in Kandidatenzellen einer bestimmten sekundären Zelle höher als ein Schwellenwert der Dienstgüte ist, und eine Anzahl der aktuellen sekundären Zellen des UE einen oberen Grenzwert nicht erreicht.

4. Vorrichtung zum Erreichen von Trägeraggregation in einem Long Term Evolution Advanced-, LTE-A, System, das sich auf einer Netzwerkseite befindet, aufweisend ein Aufbaumodul, ein Auswahlmodul für sekundäre Zellen und ein Verwaltungsmodul, wobei
das Aufbaumodul konfiguriert ist, um eine sekundäre Zellenkandidaten-Zellenliste für ein Benutzergerät UE aufzubauen, nachdem das UE mit Trägeraggregationsfähigkeit zunächst auf eine primäre Zelle zugreift, wobei das Aufbaumodul angepasst ist, um die sekundäre Zellenkandidaten-Zellenliste für das UE gemäß einer oder mehreren der folgenden Nachbarlisten der primären Zelle aufzubauen: eine Gleichkanal-Nachbarbeziehungsliste, eine Zwischenfrequenz-Nachbarbeziehungsliste;
das Auswahlmodul für sekundäre Zellen konfiguriert ist, um eine sekundäre Kandidatenzelle für das UE aus der sekundären Zellenkandidaten-Zellenliste auszuwählen, die durch das Aufbaumodul für das UW aufgebaut wurde;
das Verwaltungsmodul konfiguriert ist, um eine oder mehrere der folgenden Operationen an aktuellen sekundären Zellen des UE gemäß Dienstgüte der ausgewählten sekundären Kandidatenzelle auszuführen:
Löschen der ausgewählten sekundären Zelle aus den aktuellen sekundären Zellen des UE; und
Hinzufügen der ausgewählten sekundären Kandidatenzelle zu den aktuellen sekundären Zellen des UE;
das Verwaltungsmodul konfiguriert ist, um zu entscheiden, eine bestimmte sekundäre Zelle in den aktuellen sekundären Zellen des UE gemäß einer Puffergröße des UE und Kanalqualität und einer Last der bestimmten sekundären Zelle zu deaktivieren, wobei das Verwaltungsmodul angepasst ist, um die sekundäre Zelle explizit zu deaktivieren, wenn der BSR des UE niedriger als ein zweiter Schwellenwert des BSR ist, und der CQI der zu deaktivierenden sekundären Zelle niedriger als ein zweiter Schwellenwert des CQI ist;
das Verwaltungsmodul konfiguriert ist, um zu entscheiden, eine bestimmte sekundäre Zelle in den aktuellen sekundären Zellen des UE gemäß einer Puffergröße des UE, Kanalqualität und einer Last der bestimmten sekundären Zelle zu aktivieren, wobei das Verwaltungsmodul angepasst ist, um die sekundäre Zelle zu aktivieren, wenn ein Pufferstatusbericht BSR des UE einen ersten Schwellenwert des BSR erreicht, und ein Kanalqualitätsindikator CQI der sekundären Zelle einen ersten Schwellenwert des CQI erreicht, und eine Last der zu aktivierenden sekundären Zelle niedriger als ein Schwellenwert der Last ist.

5. Vorrichtung nach Anspruch 4, wobei
das Verwaltungsmodul konfiguriert ist, um zu entscheiden, eine bestimmte sekundäre Zelle mittels Löschen der sekundären Zelle aus den aktuellen sekundären Zellen des UE zu löschen: wenn die Dienstgüte einer bestimmten sekundären Zelle in den aktuellen sekundären Zellen des UE niedriger ist als ein Schwellenwert der Dienstgüte;
das Verwaltungsmodul konfiguriert ist, um zu entscheiden, eine bestimmte sekundäre Zelle mittels Hinzufügen der sekundären Zelle zu den aktuellen sekundären Zellen des UE hinzuzufügen: wenn die Dienstgüte einer bestimmten sekundären Zelle in Kandidatenzellen der bestimmten sekundären Zelle höher als ein Schwellenwert der Dienstgüte ist, und eine Anzahl der aktuellen sekundären Zellen des UE einen oberen Grenzwert nicht erreicht.

## Revendications

1. Méthode de réalisation d'une agrégation de porteuse dans un système d'évolution à long terme avancé LTE-A, comprenant :
un côté réseau (100), après un équipement utilisateur (UE), avec capacité d'agrégation de porteuse, accédant initialement à une cellule primaire, en constituant une liste de cellules candidates de cellule secondaire pour l'UE, en sélectionnant une cellule secondaire candidate pour l'UE à partir de la liste de cellules candidates de cellule secondaire ;
le côté réseau constituant la liste de cellules candidates de cellule secondaire pour l'UE conformément à une ou plusieurs des listes voisines suivantes de la cellule primaire :
une liste de relations voisines à co-fréquence, une liste de relations voisines d'inter-fréquences ;
le côté réseau décidant d'exécuter les opérations suivantes sur des cellules secondaires actuelles de l'UE en fonction de la qualité de service de la cellule secondaire candidate :
la suppression (300-1) de la cellule secondaire candidate sélectionnée des cellules secondaires actuelles de l'UE ; ou
l'adjonction de la cellule secondaire candidate sélectionnée dans les cellules secondaires actuelles de l'UE ; et
la méthode comprenant en outre :
la décision (300-2) côté réseau de l'activation éventuelle d'une certaine cellule secondaire dans les cellules secondaires actuelles de l'UE selon une taille tampon de l'UE, et une qualité de canal et une charge de la certaine cellule secondaire ; et
la décision (300-3) par le côté réseau de la désactivation éventuelle d'une certaine cellule secondaire dans les cellules secondaires actuelles de l'UE selon une taille tampon de l'UE, de la qualité du canal, et d'une charge de la certaine cellule secondaire,
l'étape de décision par le côté réseau d'activation d'une certaine cellule secondaire dans les cellules secondaires actuelles de l'UE selon une taille tampon de l'UE, de la qualité du canal, et d'une charge de la certaine cellule secondaire comprenant :
lorsqu'un rapport d'état du tampon - BSR - de l'UE atteint un premier seuil du BSR et un indicateur de qualité du canal - CQI - de la cellule secondaire atteint un premier seuil du CQI, et une charge de la cellule secondaire devant être activée est inférieure à un seuil de la charge, le côté réseau activant la cellule secondaire ; et
l'étape de la décision par le côté réseau de la désactivation d'une certaine cellule secondaire dans les cellules secondaires actuelles de l'UE selon une taille tampon de l'UE, de la qualité du canal, et d'une charge de la certaine cellule secondaire, comprenant :
lorsque le BSR de l'UE est inférieur à un deuxième seuil du BSR et le CQI de la cellule secondaire à désactiver est inférieur à un deuxième seuil du CQI, le côté réseau désactivant explicitement la cellule secondaire.

2. Méthode selon la revendication 1, une étape du côté réseau décidant de supprimer une cellule secondaire correspondante des cellules secondaires actuelles de l'UE en fonction de la qualité de service de la cellule secondaire comprenant :
lorsque la qualité de service d'une certaine cellule secondaire dans les cellules secondaires actuelles de l'UE est inférieure à un seuil de la qualité de service, le côté réseau supprimant la cellule secondaire des cellules secondaires actuelles de l'UE.

3. Méthode selon la revendication 1 ou 2, une étape du côté réseau décidant d'ajouter une cellule secondaire correspondante dans les cellules secondaires actuelles de l'UE selon la qualité de service de l'UE comprenant :
lorsque la qualité de service d'une cellule secondaire dans des cellules candidates d'une certaine cellule secondaire est supérieure à un seuil de la qualité de service, et un certain nombre de cellules secondaires actuelles de l'UE n'atteignent pas une valeur limite supérieure, le côté réseau ajoutant la cellule secondaire correspondante aux cellules secondaires actuelles de l'UE.

4. Appareil pour la réalisation d'une agrégation de porteuse dans un système d'évolution à long terme avancé LTE-A, situé sur un côté réseau, comprenant un module de construction, un module de sélection d'une cellule secondaire, et un module de gestion,
le module de construction étant configuré pour construire une liste de cellules candidates de cellule secondaire pour un Équipement utilisateur, UE, après l'accès initial, par l'UE avec capacité d'agrégation, à une cellule primaire, le module de construction étant adapté pour constituer la liste de cellules candidates de cellule secondaire pour l'UE, selon la ou plusieurs des listes voisines suivantes de la cellule primaire : une liste de relations voisines à co-fréquence, une liste de relations voisines d'inter-fréquences ;
le module de sélection de cellule secondaire étant configuré pour sélectionner une cellule secondaire candidate pour l'UE dans la liste de cellules candidates de cellule secondaire construite pour l'UE par le module de construction ;
le module de gestion étant configuré pour effectuer une ou plusieurs des opérations suivantes sur les cellules secondaires actuelles de l'UE selon la qualité de service de la cellule candidate secondaire sélectionnée :
en supprimant la cellule secondaire sélectionnée des cellules secondaires actuelles de l'UE ; et
en ajoutant la cellule secondaire candidate sélectionnée aux cellules secondaires actuelles de l'UE ;
le module de gestion étant configuré pour décider de désactiver une certaine cellule secondaire dans les cellules secondaires actuelles de l'UE en fonction d'une taille de tampon de l'UE, de la qualité du canal, et d'une charge de la certaine cellule secondaire, le module de gestion étant adapté, lorsque le BSR de l'UE est inférieur à un deuxième seuil du BSR et le CQI de la cellule secondaire à désactiver est inférieur à un deuxième seuil du CQI, pour désactiver de façon explicite la cellule secondaire ;
le module de gestion étant configuré pour décider d'activer une certaine cellule secondaire dans les cellules secondaires actuelles de l'UE en fonction d'une taille de tampon de l'UE, de la qualité du canal, et d'une charge de la certaine cellule secondaire, le module de gestion étant adapté, lorsque le rapport d'état du tampon, BSR, de l'UE atteint un premier seuil du BSR, un indicateur de qualité du canal, CQI, de la cellule secondaire atteint un premier seuil du CQI, et une charge de la cellule secondaire à activer est inférieure à un seuil de la charge, pour activer la cellule secondaire.

5. Appareil selon la revendication 4,
le module de gestion étant configuré pour décider d'activer une certaine cellule secondaire de la façon suivante :
lorsque la qualité de service d'une certaine cellule secondaire dans les cellules secondaires actuelles de l'UE est inférieure à un seuil de qualité de service, en supprimant la cellule secondaire des cellules secondaires actuelles de l'UE ;
le module de gestion étant configuré pour décider d'ajouter une certaine cellule secondaire de la façon suivante : lorsque la qualité de service d'une certaine cellule secondaire dans des cellules candidates de la certaine cellule secondaire est supérieure à un seuil de la qualité de service, et un nombre des cellules secondaires actuelles de l'UE n'atteint pas une limite supérieure, en ajoutant la cellule secondaire dans les cellules secondaires actuelles de l'UE.
